# EUROPÄISCHE PATENTANMELDUNG

(11) **EP 0 941 876 A2**
(43) Veröffentlichungstag der Anmeldung: **15.09.1999**
(21) Anmeldenummer: 99104529.5
(22) Anmeldetag: 06.03.1999
(51) Int. Cl.: B60G 17/04

(54) **Bedarfsabhängig ein- und ausschaltbarer Kompressor und Verfahren zur Steuerung bzw. Regelung eines solchen Kompressors**

(30) Priorität: 12.03.1998 DE 19810764
(71) Anmelder: Continental Aktiengesellschaft, 30165 Hannover (DE)
(72) Erfinder: Wode, Stefan, Dr., 30851 Langenhagen (DE)

(57) **Zusammenfassung**

Die Erfindung betrifft ein Verfahren zur Steuerung bzw. Regelung eines bedarfsabhängig ein- und ausschaltbaren Kompressors 4, dem eine den Kompressor 4 ein- und ausschaltbare Steuereinheit 6 zugeordnet ist. Bei einem derartigen Verfahren muß sichergestellt werden, daß der Kompressor 4 nicht durch Überhitzung beschädigt wird. Dies wird dadurch erreicht, daß der Kompressor 4 durch die Steuereinheit 6 während eines Regelvorganges bis zu einem Grenzwert durchgängig und ab Erreichen des Grenzwertes getaktet betrieben wird. Das Verfahren macht es möglich, daß Regelvorgänge auch dann noch abgeschlossen werden können, wenn ein kritischer Grenzwert bereits erreicht ist.

## Beschreibung

Die Erfindung betrifft ein Verfahren zur Steuerung bzw. Regelung eines bedarfsabhängig ein- und ausschaltbaren Kompressors oder Motors, dem eine den Kompressor ein- und ausschaltbare Steuereinheit zugeordnet ist. Die Erfindung betrifft ferner einen bedarfsabhängig ein- und ausschaltbaren Kompressor oder Motor, dem eine den Kompressor ein- und ausschaltbare Steuereinheit zugeordnet ist.

In jüngster Zeit werden Kraftfahrzeuge bevorzugt an der Hinterachse mit einer Luftfederung versehen, da diese es erlaubt, die Höhe des Fahrzeugaufbaus unabhängig vom Beladungszustand des Kraftfahrzeuges konstant zu halten. Soll der Fahrzeugaufbau nach einer Beladung des Kraftfahrzeuges angehoben werden, so werden die Luftfedern von einem Kompressor mit Druckluft gespeist. Während der Einschaltzeiten des Kompressors tritt in dem Kompressor eine Wärmeentwicklung auf, die dort zu einem Temperaturanstieg führt. Bei einem zu starken Temperaturanstieg in dem Kompressor kann es zu einer Beschädigung des Kompressors kommen. Diese Gefahr ist dann beispielsweise besonders groß, wenn das Kraftfahrzeug wiederholt stark beladen wird und der Aufbau des Kraftfahrzeuges mit Hilfe der Luftfederung wieder auf das vorherige Niveau angehoben wird. Eine Gefährdung des Kompressors entsteht auch durch eine unsachgemäße Nutzung der Luftfederung. Aus den genannten Gründen ist es wichtig, den Kompressor im eingeschalteten Zustand vor einer zu großen Wärmeentwicklung zu schützen.

Aus der DE 196 21 946 ist ein bedarfsabhängig ein- und ausschaltbarer Kompressor, dem eine den Kompressor ein- und ausschaltbare Steuereinheit zugeordnet ist, bekannt. Der Kompressor weist eine Überlastsicherung auf, die ihn vor zu hohen Temperaturen schützt und die wie folgt funktioniert: Während der Einschaltzeiten des Kompressors wird anhand der Einschaltdauer des Kompressors die Temperatur mit Hilfe der Steuereinheit in dem Kompressor abgeschätzt. Die Steuereinheit schaltet den Kompressor ab, wenn der berechnete Schätzwert einen oberen Temperaturschwellwert, oberhalb dem der Kompressor Schaden nehmen kann, überschreitet. Der Kompressor kann dann abkühlen. Auch während der Abkühlphase wird in der Steuereinheit ein Schätzwert für die Temperatur im Kompressor berechnet. Wenn dieser Schätzwert einen unteren Temperaturschätzwert unterschreitet, so schaltet die Steuereinheit den Kompressor ein bzw. gestattet die Einschaltung des Kompressors zu einem späteren Zeitpunkt, wenn im Moment kein Regelbedarf besteht.

Das aus der DE 196 21 946 C1 bekannte Verfahren zur Steuerung bzw. Regelung eines bedarfsabhängig ein- und ausschaltbaren Kompressors läßt sich ohne Temperaturfühler durchführen, da in der Steuereinheit lediglich Schätzwerte für die Temperatur des Kompressors berechnet werden. Darüber hinaus wird der Kompressor der Luftfederung durch das Verfahren zuverlässig vor zu hohen Temperaturen geschützt, so daß eine Schädigung des Kompressors weitestgehend auch bei unsachgemäßer Betätigung der Luftfederung ausgeschlossen ist. Es ist jedoch festzustellen, daß der obere Temperaturschwellwert immer während eines Regelvorgangs erreicht bzw. überschritten wird und daß der Regelvorgang durch die Steuereinheit dann abgebrochen wird. Das bedeutet, daß der Regelvorgang nicht oder erst mit starker Zeitverzögerung abgeschlossen wird, nämlich nach der Abkühlung des Kompressors unterhalb des unteren Temperaturschwellwertes. Da die Kompressoren einer Luftfederung aus akustischen Gründen und zum Schutz vor mechanischen Belastungen in den meisten Fällen gut gekapselt sind, kann die Abkühlzeit einige Minuten bis zu einer Viertelstunde in Anspruch nehmen. Eine derartig lange Unterbrechung bzw. Verzögerung des Regelvorgangs ist unbefriedigend.

Der Erfindung liegt die Aufgabe zugrunde, ein Verfahren zur Steuerung bzw. Regelung eines bedarfsabhängig ein- und ausschaltbaren Kompressors oder Motors zu schaffen, in dem Unterbrechungen von Regelvorgängen weitestgehend vermieden werden können. Der Erfindung liegt ferner die Aufgabe zugrunde, einen bedarfsabhängig ein- und ausschaltbaren Kompressor oder Motor, dem eine den Kompressor ein- und ausschaltbare Steuereinheit zugeordnet ist, zu schaffen, mit dem das Verfahren durchführbar ist.

Gemäß Anspruch 1 wird die Aufgabe dadurch gelöst, daß der Kompressor bis zu einem Grenzwert durchgängig betrieben und ab Erreichen dieses Grenzwertes durch die Steuereinheit getaktet betrieben wird. Gemäß dem nebengeordneten Anspruch 7 wird die Aufgabe ebenfalls dadurch gelöst, daß der Kompressor durch die Steuereinheit bis zu einem Grenzwert durchgängig betreibbar und ab Erreichen dieses Grenzwertes getaktet betreibbar ist.

Als Grenzwert kann entweder ein Temperaturgrenzwert oder ein Zeitgrenzwert festgelegt werden. Wird ein Temperaturgrenzwert festgelegt, so kann die Temperatur des Kompressors mit Hilfe eines Temperaturfühlers etc. gemessen werden. Bevorzugt wird auf einen derartigen Temperaturfühler etc. jedoch aus Kosten- bzw. Anfälligkeitsgründen verzichtet. In diesem Fall kann die Temperatur des Kompressors mit Hilfe von Verfahren abgeschätzt werden, wie sie beispielsweise aus der DE 196 21 946 C1 oder aus der DE 43 33 591 A1 bekannt sind. Alternativ kann als Grenzwert auch ein Zeitgrenzwert überwacht werden. In diesem Fall wird von der Steuereinheit die Einschaltzeit des Kompressors, beispielsweise mittels eines Zählers überwacht und der Kompressor wird getaktet betrieben, wenn die Einschaltzeit einen Zeitgrenzwert überschreitet.

Die mit der Erfindung erzielten Vorteile sind insbesondere darin zu sehen, daß ein Regelvorgang auch dann noch fortgeführt wird, wenn im Kompressor ein vorgegebener Grenzwert erreicht ist. Durch den getakteten Betrieb des Kompressors ab Erreichen des Grenzwertes verlangsamt sich zwar der Regelvorgang, es kommt jedoch nicht zu einem Abbruch bzw. zu einer länger andauernden Unterbrechung des Regelvorganges. Trotz dieses Vorteils ist einer Überhitzung des Kompressors durch das erfindungsgemäße Verfahren sicher vorgebeugt. Während des Taktbetriebes des Kompressors ist die mittlere Leistungsaufnahme des Kompressors nämlich um das Taktverhältnis (d. h. Einschaltzeit des Kompressors zu Stillstandzeit des Kompressors während eines Taktes) verringert. Man hat also die Möglichkeit, den mittleren Temperaturanstieg des Kompressors stark zu reduzieren bzw. zu Null zu bringen bzw. sogar eine Abkühlung des Kompressors herbeizuführen, obwohl der Regelvorgang fortgesetzt wird.

Gemäß einer Weiterbildung des Verfahrens nach Anspruch 2 ist die Taktdauer während des Taktbetriebes deutlich kürzer als die Regelzeit, die ein ungetakteter Regelvorgang üblicherweise durchschnittlich in Anspruch nimmt. Wenn ein durchschnittlicher ungetakteter Regelvorgang z. B. ca. 20 - 30 Sekunden dauert, dauert bei einem getakteten Regelvorgang die Taktung etwa 5 - 10 Sekunden. Die Taktdauer eines Taktes liegt dann etwa in dem Bereich von 2 - 5 Sekunden. Allgemein formuliert: Wenn bei einem Fahrzeug ein durchschnittlicher Regelvorgang ca. x Sekunden benötigt, dauert bei einem getakteten Regelvorgang die Taktung etwa 1/10 x bis ½ x Sekunden. Die Taktdauer eines Taktes liegt dann etwa im Bereich von 1/20 x bis 1/6 x Sekunden.

Gemäß einer weiteren Weiterbildung des Verfahrens nach Anspruch 3 wird das Taktverhältnis während eines getakteten Regelvorgangs mit zunehmender Dauer des Regelvorganges verkleinert. Eine derartige Verkleinerung des Taktverhältnisses kann dadurch geschehen, daß die Taktzeit konstant gehalten wird und die Einschaltzeit des Kompressors zugunsten der Stillstandzeit des Kompressors während eines Taktes verkleinert wird. Eine weitere Möglichkeit besteht darin, die Taktzeit durch Verlängerung der Stillstandzeit des Kompressors während eines Taktes zu verlängern. Der Vorteil dieses Ausführungsbeispiels ist darin zu sehen, daß mit zunehmender Dauer des getakteten Regelvorgangs die mittlere Leistungsausnahme des Kompressors immer stärker abnimmt. Dadurch wird sichergestellt, daß auch bei lang anhaltenden getakteten Regelvorgängen sich der Kompressor nicht weiter erhitzt bzw. sogar abkühlt.

Gemäß einer zusätzlichen Weiterbildung des Verfahrens nach Anspruch 4 wird während eines getakteten Regelvorganges mit zunehmender Dauer des Regelvorganges die Taktfrequenz erniedrigt. Dieser Weiterbildung liegt der folgende Gedanke zugrunde: Während eines getakteten Regelvorganges wird der Kompressor während eines jeden Taktes eingeschaltet, wodurch in dem Kompressor Einschaltströme entstehen, durch die aufgrund ohmscher Verluste die empfindlichen Bauteile des Kompressors (z. B. dessen Kohlebürsten) besonders belastet werden. Werden nur wenige Takte pro Zeiteinheit und entsprechend weniger Einschaltvorgänge pro Zeiteinheit durchgeführt, so ist eine Schädigung der empfindlichen Bauteile des Kompressors dennoch ausgeschlossen. Diese Verringerung der Einschaltvorgänge pro Zeiteinheit wird gemäß Anspruch 4 dadurch herbeigeführt, daß mit zunehmender Dauer des Regelvorganges die Taktzeiten verlängert bzw. dieTaktfrequenz erniedrigt wird.

Eine weitere Weiterbildung des erfindungsgemäßen Verfahrens nach Anspruch 5 ist dadurch gekennzeichnet, daß
- unmittelbar vor dem Regelvorgang die Temperatur des Kompressors abgeschätzt wird
- vor dem oder während des Regelvorganges die Temperatur abgeschätzt wird, die der Kompressor am Ende des Regelvorganges voraussichtlich erreichen wird
- und der Kompressor zunächst durchgängig betrieben wird, wenn die Temperatur des Kompressors unmittelbar vor dem Regelvorgang unterhalb einer unteren Schwellentemperatur betrieben wird und ab Erreichen einer zulässigen Dauertemperatur getaktet betrieben wird, wenn die abgeschätzte Temperatur, die der Kompressor am Ende des Regelvorganges voraussichtlich erreichen wird, oberhalb einer bestimmten Spitzentemperatur liegt.

Als zulässige Dauertemperatur wird vorzugsweise die Temperatur festgelegt, oberhalb der der Kompressor kurzfristig ohne Schädigung betrieben werden kann. Als Spitzentemperatur wird vorzugsweise eine Temperatur festgelegt, die größer ist als die Dauertemperatur und die von dem Kompressor auf keinen Fall, auch nicht kurzfristig, überschritten werden darf. Ergibt die Abschätzung vor dem oder während des Regelvorganges, daß der Kompressor am Ende des Regelvorganges die Spitzentemperatur sicher nicht überschreiten wird, so wird der Regelvorgang ungetaktet zu Ende geführt, auch wenn die zulässige Dauertemperatur überschritten wird. Der Vorteil der Weiterbildung nach Anspruch 5 ist darin zu sehen, daß ein Regelvorgang auch dann noch ungetaktet und damit in der kürzestmöglichen Zeit abgeschlossen wird, wenn der Kompressor nur kurzfristig die zulässige Dauertemperatur überschreitet.

Eine Abschätzung der Temperatur, die der Kompressor am Ende des Regelvorganges erreichen wird, kann während des Regelvorganges z. B. dadurch erfolgen, daß mit Hilfe eines Höhensensors der für den Regelvorgang notwendige Hubweg und die Hubgeschwindigkeit abgeschätzt wird. Auf Basis des Hubweges kann dann auf das Gewicht rückgeschlossen werden, mit dem das Fahrzeug beladen worden ist und es liegen dann alle Größen vor, die zur Berechnung der Leistung, die dem Kompressor abverlangt wird, notwendig sind. Aus der Leistung kann auf die Temperaturentwicklung im Kompressor geschlossen werden.

In einer Weiterbildung des Verfahrens nach Anspruch 5 gemäß Anspruch 6 wird der Kompressor bereits ab Beginn des Regelvorganges getaktet betrieben, wenn seine Temperatur unmittelbar vor dem Regelvorgang oberhalb der unteren Schwellentemperatur liegt. Der Vorteil dieses Ausführungsbeispiels ist darin zu sehen, daß auch bei einem über die Schwellentemperatur erwärmten Kompressor ein Regelvorgang gefahrlos durchgeführt werden kann, ohne unmittelbar nach Einsetzen des Regelvorganges in den kritischen Temperaturbereich zwischen zulässiger Dauertemperatur und Spitzentemperatur zu kommen. Dies ist dann besonders vorteilhaft, wenn die Kompressortemperatur kurz unterhalb der Dauertemperatur liegt bzw. diese bereits erreicht oder überschritten hat.

Ein Ausführungsbeispiel und weitere Vorteile der Erfindung werden im Zusammenhang mit den nachstehenden Figuren erläutert, darin zeigt:
- Fig. 1: eine Luftfederung in schematisierter Darstellung
- Fig. 2: ein Diagramm
- Fig. 3: ein Diagramm
- Fig. 4: ein Diagramm
- Fig. 5: ein Diagramm.

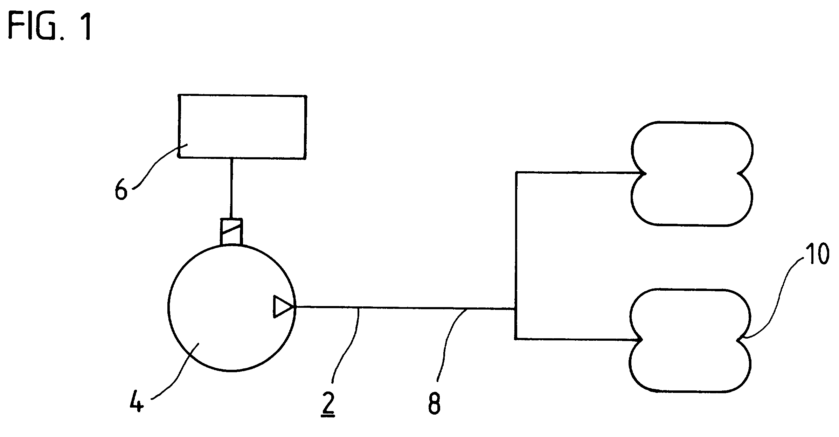

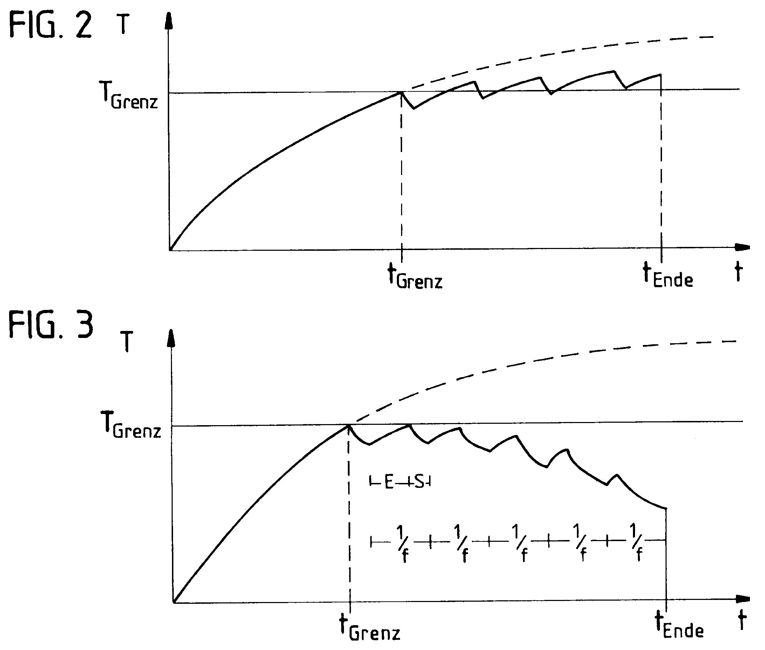

Figur 1 zeigt in stark schematisierter Darstellung eine Luftfederung 2 mit einem Kompressor 4, einer Steuereinheit 6 und Luftfedern 10, die über Versorgungsleitungen 8 mit Hilfe des Kompressors 4 mit Druckluft gefüllt werden können. In der Figur 1 sind nur die für diese Erfindung notwendigen Details gezeigt. Der Kompressor 4 ist durch die Steuereinheit 6 ein- und ausschaltbar. Im eingeschaltetem Zustand kommt es in dem Kompressor 4 zu einer Wärmeentwicklung und infolgedessen zu einer Temperaturerhöhung. Erreicht die Kompressortemperatur einen bestimmten Grenzwert, so wird der Kompressor 4 durch die Steuereinheit 6 getaktet betrieben. Dadurch kann einer Überhitzung des Kompressors 4 vorgebeugt werden, wie es im Folgenden im Zusammenhang mit den Figuren 2 bis 5 erläutert wird.

Fig. 2 zeigt ein Diagramm, in dem die Temperatur T über der Zeit t aufgetragen ist. Zum Zeitpunkt t = 0 wird der Kompressor 4 durch die Steuereinheit 6 angesteuert und ein Regelvorgang beginnt. Zunächst wird der Kompressor 4 durchgängig betrieben, bis die Temperatur T einen Grenzwert T_{Grenz}, bzw. bis die verstrichene Zeit, während der der Kompressor durchgängig betrieben wird, einen Grenzwert t_{Grenz} erreicht hat. Ab dem Temperaturgrenzwert T_{Grenz} bzw. ab dem Zeitgrenzwert t_{Grenz} wird der Kompressor 4 durch die Steuereinheit 6 getaktet betrieben, so wie es auch der Figur 2 zu entnehmen ist. Der Taktbetrieb des Kompressors führt zu einer Verringerung der mittleren Leistungsaufnahme des Kompressors, da der Kompressor nur noch während der Zeitintervalle Leistung aufnimmt, in denen er eingeschaltet ist. Abhängig von dem durch die Steuereinheit vorgegebenen Taktverhältnis (d. h. von dem Verhältnis der Einschaltzeit zur Stillstandzeit des Kompressors während eines Taktes) kann das Temperaturverhalten des Kompressors so eingestellt werden, daß sich der erreichte Temperaturgrenzwert leicht erhöht, bzw. konstant gehalten wird, bzw. sogar sinkt. Eine leichte Erhöhung der Temperatur stellt sich während des Taktbetriebes beispielsweise dann ein, wenn das Taktverhältnis so vorgegeben wird, daß sich der Kompressor während einesTaktes stärker erwärmt als abkühlt. Eine konstante Temperatur kann beispielsweise dadurch erreicht werden, daß das Taktverhältnis so vorgegeben wird, daß während eines jeden Taktes die Erwärmung und die Abkühlung des Kompressors im Gleichgewicht stehen. Dementsprechend kann eine Abkühlung des Kompressors im Taktbetrieb z. B. dadurch erzielt werden, daß das Taktverhältnis so vorgegeben wird, daß sich der Kompressor während eines jeden Taktes stärker abkühlt als erwärmt. Das Taktverhältnis wird entsprechend dem gewünschten Ergebnis durch die Steuereinheit 6 vorgegeben.

Der Regelvorgang, der ab Erreichen des Temperaturgrenzwertes T_{Grenz} bzw. ab Erreichen des Zeitgrenzwertes t_{Grenz} getaktet betrieben wird, dauert bis zum Zeitpunkt t_{Ende}, in dem er abgeschlossen ist (der Fahrzeugaufbau also die gewünschte Höhe eingenommen hat), an. Er wird bis zum Zeitpunkt t_{Ende} - abgesehen von den kurzen Unterbrechungen während der Takte - ohne langfristige Unterbrechung durchgeführt. Somit ist die Zeitverlängerung des getakteten Regelvorganges gegenüber einem vollständig ungetakteten Regelvorgang unerheblich.

Fig. 3 ist ebenfalls ein Diagramm zu entnehmen, in dem die Temperatur T über der Zeit t aufgetragen ist. Bis zu dem Temperaturgrenzwert T_{Grenz} bzw. bis zu dem Zeitgrenzwert t_{Grenz} stimmt das Diagramm gemäß Fig. 3 mit dem Diagramm gemäß Fig. 2 schematisch überein, so daß auf diesen Bereich nicht noch einmal näher eingegangen werden soll. Dem Diagramm gemäß Fig. 3 ist zu entnehmen, daß der Kompressor 4 ab Erreichen der Temperatur T_{Grenz} bzw. ab Erreichen der Zeit t_{Grenz} durch die Steuereinheit 6 getaktet betrieben wird, wobei sich das Taktverhältnis während des Regelvorganges mit zunehmender Dauer des Regelvorganges verkleinert. Bei dem in der Fig. 3 gezeigten Diagramm wird dies bei konstanter Taktzeit 1/f dadurch erreicht, daß die Einschaltzeit E des Kompressors innerhalb eines Taktes zugunsten der Stillstandzeit S des Kompressors innerhalb eines Taktes verkleinert wird. Das Verfahren führt dazu, daß der Temperaturanstieg des Kompressors während eines Taktes immer stärker abnimmt, wohingegen der Temperaturabfall des Kompressors während eines Taktes immer stärker zunimmt. Durch das Verfahren kann also auch bei Fortführung des Regelvorganges eine Abkühlung des Kompressors 4 erreicht werden, obwohl der Kompressor zuvor den Temperaturgrenzwert T_{Grenz} erreicht hat. Der Regelvorgang ist auch hier zum Zeitpunkt t_{Ende} abgeschlossen.

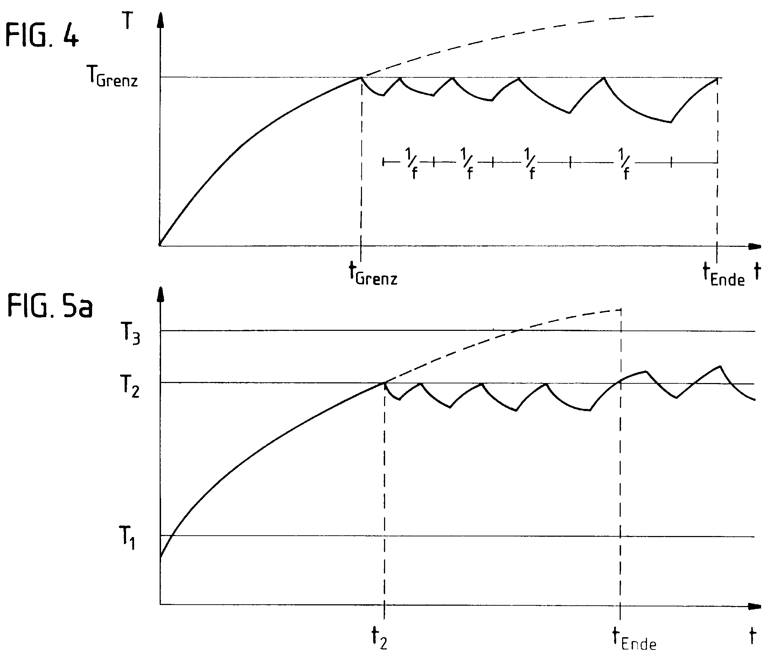

Fig. 4 zeigt ein Diagramm, in dem ebenfalls die Temperatur T über der Zeit t aufgetragen ist. Bis zu dem Temperaturgrenzwert T_{Grenz} bzw. bis zu dem Zeitgrenzwert t_{Grenz} stimmt das Diagramm 4 wiederum mit den Diagrammen gemäß Fig. 2 und 3 überein, so daß bezüglich dieses Bereiches auf die Ausführungen zu Fig. 2 verwiesen wird. Ab Erreichen des Temperaturgrenzwertes T_{Grenz} bzw. des Zeitgrenzwertes t_{Grenz} wird der Kompressor 4 durch die Steuereinheit 6 wiederum getaktet betrieben. Der Figur 4 ist zu entnehmen, daß während des getakteten Regelvorganges mit zunehmender Dauer des Regelvorganges die Taktfrequenz f erniedrigt bzw. die Taktzeit 1/f verlängert wird. Dies führt dazu, daß während des Taktbetriebes des Kompressors mit zunehmender Dauer des Regelvorganges weniger Einschaltvorgänge des Kompressors pro Zeit vorgenommen werden müssen. Aus diesem Grunde werden in dem Kompressor 4 weniger Einschaltströme generiert und die thermische Belastung empfindlicher Bauteile des Kompressors 4 durch diese Einschaltströme nimmt ab. Auch hier ist der Regelvorgang zum Zeitpunkt t_{Ende} abgeschlossen.

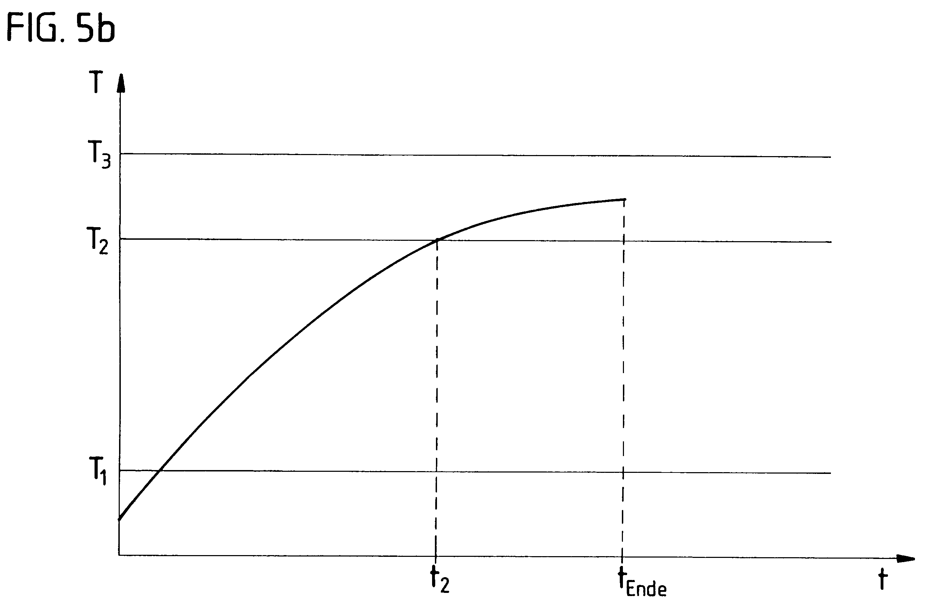

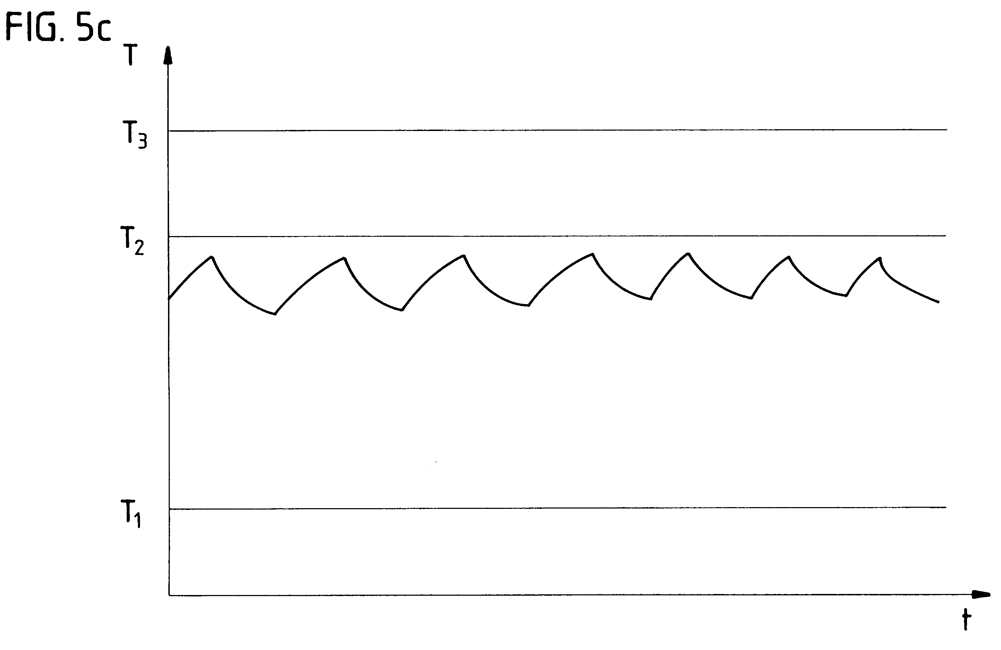

Fig. 5 zeigt ebenfalls ein Diagramm, in dem die Temperatur T über der Zeit t aufgetragen ist. In dem Diagramm gemäß Fig. 5 sind drei Temperaturgrenzwerte eingetragen, nämlich eine untere Schwellentemperatur T₁, eine zulässige Dauertemperatur T₂ und eine Spitzentemperatur T₃. Unmittelbar vor dem Regelvorgang wird die Temperatur des Kompressors 4 abgeschätzt. Liegt diese Temperatur unterhalb der unteren Schwellentemperatur T₁, so wie es in dem Diagramm gemäß der Figur 5a der Fall ist, so wird der Regelvorgang mit durchgängig laufendem Kompressor begonnen. Während des Regelvorganges wird die Temperatur abgeschätzt, die der Kompressor 4 am Ende des Regelvorganges voraussichtlich erreichen wird. Liegt diese Temperatur am Ende des Regelvorganges (d. h. zu dem Zeitpunkt t_{Ende}) oberhalb der Spitzentemperatur T₃, so wie es bei der Figur 5a der Fall ist, so wird der Kompressor ab Erreichen der zulässigen Dauertemperatur T₂ bzw. mit Erreichen der Zeit t₂ getaktet betrieben (s. Figur 5a). Auch hier besteht die Möglichkeit, den Kompressor 4 durch die Steuereinheit 6 mit einem Taktverhältnis derart zu betreiben, daß die Temperatur des Kompressors entweder leicht ansteigt, konstant bleibt oder aber absinkt.

Dem Diagramm gemäß Figur 5b ist ein Beispiel zu entnehmen, in dem die Temperatur des Kompressors 4 unmittelbar vor dem Regelvorgang ebenfalls unterhalb der unteren Schwellentemperatur T₁ liegt. Während des Regelvorganges wird wiederum die Temperatur abgeschätzt, die der Kompressor am Ende t_{Ende} des Regelvorganges voraussichtlich erreichen wird. Liegt diese Temperatur unterhalb der Spitzentemperatur T₃, so wie es in dem Diagramm gemäß Figur 5b der Fall ist, so wird der Regelvorgang auch über die zulässige Dauertemperatur T₂ hinaus durchgängig betrieben. Die zulässige Dauertemperatur T₂ wird dann für die Zeit (t_{Ende} - t₂) überschritten, jedoch wird die zulässige Dauertemperatur T₂ so vorgegeben, daß eine derartige kurzfristige Überschreitung der zulässigen Dauertemperatur dem Kompressor 4 nicht schadet.

Dem Diagramm gemäß Figur 5c ist ein Beispiel zu entnehmen, in dem die abgeschätzte Temperatur des Kompressors 4 unmittelbar vor dem Regelvorgang bereits über der unteren Schwellentemperatur T₁ liegt. In diesem Fall wird der Regelvorgang von Anfang an getaktet begonnen, wobei das Taktverhältnis durch die Steuereinheit wiederum so vorgegeben werden kann, daß die Temperatur des Kompressors 4 entweder leicht ansteigt, konstant bleibt oder absinkt. Diese Verfahrensweise stellt sicher, daß die Temperatur des Kompressors auch dann nicht über die Spitzentemperatur T₃ ansteigt, wenn die Temperatur des Kompressors bereits zu Beginn des Regelvorganges in der Nähe der zulässigen Dauertemperatur T₂ liegt. Befindet sich die Temperatur des Kompressors 4 zu Beginn des Regelvorganges unterhalb der zulässigen Dauertemperatur T₂, so kann das Taktverhältnis derart eingestellt werden, daß die Temperatur des Kompressors 4 leicht ansteigt, bis sie in den Temperaturbereich zwischen den Temperaturen T₃ und T₂ zu liegen kommt. Liegt die Temperatur zu Beginn des Regelvorganges bereits bei der zulässigen Dauertemperatur T₂ oder sogar über dieser Temperatur, so wird das Taktverhältnis durch die Steuereinheit 6 derart vorgegeben, daß der Temperaturmittelwert des Kompressors 4 konstant bleibt bzw. absinkt. Auch in diesem Fall ist also sichergestellt, daß der Kompressor 4 die Spitzentemperatur T₃ nicht überschreitet und nicht zulange oberhalb der zulässigen Dauertemperatur T₂ betrieben wird.

### Bezugszeichenliste

- 2: Luftfederung
- 4: Kompressor
- 6: Steuereinheit
- 8: Versorgungsleitungen
- 10: Luftfedern

## Patentansprüche

1. Verfahren zur Steuerung bzw. Regelung eines bedarfsabgängig ein- und ausschaltbaren Kompressors (4) oder Motors, dem eine den Kompressor (4) ein- und ausschaltbare Steuereinheit zugeordnet ist,
**dadurch gekennzeichnet,** daß
der Kompressor (4) durch die Steuereinheit (6) bis zu einem Grenzwert durchgängig betrieben und ab Erreichen des Grenzwertes getaktet betrieben wird.

2. Verfahren zur Steuerung bzw. Regelung eines bedarfsabhängig ein- und ausschaltbaren Kompressors (4) oder Motors nach Anspruch 1, dadurch gekennzeichnet, daß die Taktdauer während des Taktbetriebes deutlich kürzer ist als die Regelzeit, die ein ungetakteter Regelvorgang in Anspruch nimmt.

3. Verfahren zur Steuerung bzw. Regelung eines bedarfsabhängig ein- und ausschaltbaren Kompressors (4) oder Motors nach einem der Ansprüche 1 oder 2, dadurch gekennzeichnet, daß das Taktverhältnis während eines getakteten Regelvorganges mit zunehmender Dauer des Regelvorganges verkleinert wird.

4. Verfahren zur Steuerung bzw. Regelung eines bedarfsabhängig ein- und ausschaltbaren Kompressors (4) oder Motors nach einem der Ansprüche 1 bis 3, dadurch gekennzeichnet, daß während eines getakteten Regelvorganges mit zunehmender Dauer des Regelvorganges die Taktfrequenz erniedrigt wird.

5. Verfahren zur Steuerung bzw. Regelung eines bedarfsabhängig ein- und ausschaltbaren Kompressors (4) oder Motors nach einem der Ansprüche 1 bis 4,
dadurch gekennzeichnet, daß
- unmittelbar vor dem Regelvorgang die Temperatur-des Kompressors abgeschätzt wird
- vor dem oder während des Regelvorganges die Temperatur abgeschätzt wird, die der Kompressor (4) am Ende des Regelvorganges voraussichtlich erreichen wird
- und der Kompressor (4) zunächst durchgängig betrieben wird, wenn die Temperatur des Kompressors (4) unmittelbar vor dem Regelvorgang unterhalb einer unteren Schwellentemperatur betrieben wird und ab Erreichen einer zulässigen Dauertemperatur getaktet betrieben wird, wenn die abgeschätzte Temperatur, die der Kompressor (4) am Ende des Regelvorganges voraussichtlich erreichen wird, oberhalb einer bestimmten Spitzentemperatur liegt.

6. Verfahren zur Steuerung bzw. Regelung eines bedarfsabhängig ein- und ausschaltbaren Kompressors (4) oder Motors nach Anspruch 5, dadurch gekennzeichnet, daß der Kompressor (4) bereits ab Beginn des Regelvorganges getaktet betrieben wird, wenn seine Temperatur unmittelbar vor dem Regelvorgang oberhalb der unteren Schwellentemperatur liegt.

7. Bedarfsabhängig ein- und ausschaltbarer Kompressor (4) oder Motor, dem eine den Kompressor (4) ein- und ausschaltbare Steuereinheit (6) zugeordnet ist, dadurch gekennzeichnet, daß der Kompressor (4) durch die Steuereinheit (6) bis zu einem Grenzwert durchgängig betreibbar und oberhalb dieses Grenzwertes getaktet betreibbar ist.

8. Bedarfsabhängig ein- und ausschaltbarer Kompressor (4) oder Motor nach Anspruch 7 dadurch gekennzeichnet, daß das Taktverhältnis während eines getakteten Regelvorganges mit zunehmender Dauer des Regelvorganges durch die Steuereinheit (6) verkleinerbar ist.

9. Bedarfsabhängig ein- und ausschaltbarer Kompressor (4) oder Motor nach einem der Ansprüche 7 oder 8, dadurch gekennzeichnet, daß während eines getakteten Regelvorganges mit zunehmender Dauer des Regelvorganges die Taktfrequenz durch die Steuereinheit (6) erniedrigbar ist.

10. Bedarfsabhängig ein- und ausschaltbarer Kompressor (4) oder Motor nach einem der Ansprüche 7 oder 8, dadurch gekennzeichnet, daß in der Steuereinheit (6) die Temperatur abschätzbar ist, die der Kompressor am Ende eines Regelvorganges erreichen wird.

11. Luftfederung, insbesondere für ein Kraftfahrzeug, dadurch gekennzeichnet, daß die Luftfederung einen Kompressor nach einem der Ansprüche 7 bis 10 enthält.
